# EUROPEAN PATENT APPLICATION

(11) **EP 2 629 278 A1**
(43) Date of publication of application: **21.08.2013**
(21) Application number: 12181358.8
(22) Date of filing: 22.08.2012
(51) Int. Cl.: G09B 7/04, A63F 9/00

(54) **Information processing program, apparatus, method and system for performing working memory training of a user**

(30) Priority: 20.02.2012 JP 2012034055
(71) Applicant: Nintendo Co., Ltd., Kyoto, 601-8501 (JP); TOHOKU UNIVERSITY, Aoba-ku Sendai-shi, Miyagi 980-8577 (JP)
(72) Inventor: Ito, Yuichiro, Kyoto, 601-8501 (JP); Kawamoto, Kouichi, Kyoto, 601-8501 (JP); Kitamura, Noriko, Kyoto, 601-8501 (JP); Kawashima, Ryuta, Sendai-shi, Miyagi 980-8575 (JP)
(74) Representative: Lang, Johannes

(57) **Abstract**

An information processing apparatus (10) includes a training execution section (15) which executes working memory training, a time measurement section (16) which measures cumulative training time during a given period, and a process execution section (17) which executes a process of encouraging a user to perform the working memory training on the basis of a relationship between the cumulative training time during the given period and a first ideal period of time and/or a process of restricting the user from performing the working memory training on the basis of a relationship between the cumulative training time during the given period and a second ideal period of time. The training execution section (15) functions as a display control section (153) which simultaneously provides, for each step of the working memory training, a display for the user to memorize information and a display to output information memorized by the user in a step earlier by steps, the number of which is equal to the number of steps back, an input reception section (151) which receives input provided by the user to output the memorized information, and a determination section (152) which determines whether the information received by the input reception section (151) is correct. The display control section (153) provides displays for a next step if the information is determined to be correct.

## Description

### FIELD

The present Invention relates to an information processing program, an information processing apparatus, an information processing method, and an information processing system, which are for performing working memory training.

### BACKGROUND

As training for developing working memory, working memory training is known. Examples of working memory training include training that simultaneously Inputs (memorizes) presented information and outputs memorized information. For example, calculation N-back (Go-Back-N) training is known as a form of working memory training. [0003]
Calculation N-back training is training in which one stage is composed of a plurality of steps, and in each step, memorization of the result of a currently presented calculation and output of the result of a calculation presented N steps earlier are simultaneously performed. A calculation N-back training system has been provided which causes an information processing apparatus to perform such calculation N-back training and presents information to be memorized on a display section and encourages a user to input memorized information at an input section.

As a system for implementing training of working memory by using a computer, there is available the system disclosed in Japanese Patent Laid-Open No. 2009-92696.

### SUMMARY

It is an object of the present invention to provide a new information processing program, a new information processing apparatus, a new information processing method, and a new information processing system for performing working memory training.

An information processing program according to the present invention causes an information processing apparatus to function as: training execution means for executing working memory training; time measurement means for measuring cumulative training time during a given period; and processing execution means for executing a process of encouraging a user to perform the working memory training on the basis of a relationship between the cumulative training time during the given period and a first ideal period of time and/or a process of restricting the user from performing the working memory training on the basis of a relationship between the cumulative training time during the given period and a second ideal period of time, the training execution means includes control means for executing, a plurality of times in sequence, a process of simultaneously producing output for the user to memorize information and making a request for the user to output information memorized by the user in a step earlier by a predetermined number of steps or associated information associated with the information, input reception means for receiving input provided by the user to output the memorized information in response to the request made by the control means, and determination means for determining whether the information received by the input reception means is correct, and the control means produces output and makes a request for a next step if the determination means determines that the information is correct.

With this configuration, the process of encouraging a user to perform the working memory training on the basis of the relationship between the cumulative training time during the given period (e.g., 24 hours) and the first ideal period of time (e.g., 5 minutes) is performed, and/or the process of restricting the user from performing the working memory training on the basis of the relationship between the cumulative training time during the given period and the second ideal period of time (e.g., 15 minutes) is performed. Since the control means produces output for a next step if the determination means determines that input information is correct, time from input of a correct answer to a next step which is measured by the time measurement means can be made shorter than in a case that requires waiting for a lapse of a given period of time until a next step even if a correct answer is input. Accordingly, the processing execution means can execute the process of encouraging performance of the working memory training or the process of restricting performance of the working memory training, on the basis of time spent efficiently performing the working memory training (memorization of information and output of information). If the processing execution means performs both of the process of encouraging performance of the working memory training and the process of restricting performance of the working memory training, the second ideal period of time may be not less than the first ideal period of time, and the first ideal period of time and second ideal period of time may be equal.

In the above-described information processing program, the processing execution means may execute the process of encouraging the user to perform the working memory training in order to bring the cumulative training time during the given period to not less than the first ideal period of time.

This configuration allows encouragement of a user to perform training for a given period of time or longer during a given period. Note that the process of encouraging a user to perform the working memory training in order to bring the cumulative training time during the given period to not less than the first ideal period of time may be, for example, a process of displaying remaining time before training performance time during the given period reaches the first ideal period of time, a process of displaying a message encouraging continuance of training when the training performance time during the given period has not reached the first ideal period of time, a process of displaying a message stating that the training performance time has not reached the first ideal period of time if an operation to end training is performed when the training performance time during the given period has not reached the first ideal period of time, a process of audibly outputting a message as described above instead of displaying the message, or a process of giving an incentive (e.g., a point for advancing to a next kind of training) if a user performs training for the first ideal period of time or longer.

In the above-described information processing program, the process execution means may execute the process of restricting the user from performing the working memory training after the cumulative training time during the given period reaches the second ideal period of time.

This configuration makes it possible to prevent a user from performing excessive training or encourage the user not to perform excessive training. Note that the process of restricting a user from performing the working memory training may be, for example, a process of prohibiting training after the training performance time during the given period reaches the second ideal period of time or a process of, after the training performance time during the given period reaches the second ideal period of time, displaying or audibly outputting a message to that effect.

In the above-described information processing program, the control means may produce output and make a request for the next step if the determination means does not determine that the information is correct within a time limit for the input reception means to receive input and may produce output and make a request for the next step without waiting for expiration of the time limit if the determination means determines that the information is correct within the time limit.

This configuration allows restriction of time for a user to memorize information and time for the user to output the information memorized in an earlier step and shortens time from input of a correct answer to a next step. Accordingly, effects of the working memory training can be improved.

In the above-described information processing program, the input reception means may receive input handwritten by the user, and the determination means may perform recognition processing on the handwritten input and determine whether a result of the recognition processing is correct.

This configuration allows a user to avoid being determined to have given an incorrect answer and advancing to a next step if a result of recognizing handwritten input is one that is not intended by a user.

In the above-described information processing program, the number of steps may increase or decrease on the basis of a track record of the user in performing the working memory training.

This configuration allows training at a difficulty level appropriate for the achievement degree of a user.

In the above-described information processing program, a stage of the working memory training may be composed of a predetermined number of questions, and the number of questions for the stage may depend on the number of steps.

This configuration allows obtainment of training effects corresponding to an increase in difficulty level.

In the above-described information processing program, a stage of the working memory training may be composed of a predetermined number of questions, the working memory training may have a plurality of stages for each of values of the number of steps, the plurality of stages may each have a different difficulty level related to a time limit for the input reception means to receive input, and a difficulty level of a next stage may fluctuate depending on a track record of the user in performing the working memory training.

This configuration allows prevention of a rapid increase in a difficulty level due to an increase in the number of steps.

In the above-described information processing program, a stage of the working memory training may be composed of a predetermined number of questions, and a retry that restarts the working memory training from the beginning may be possible, and when a retry instruction is given a predetermined number of times in a row, the working memory training may be restarted from the beginning of a stage at a lowered difficulty level.

This configuration makes it possible to efficiently perform the working memory training by lowering the difficulty level when the difficulty level is too high for the user.

In the above-described information processing program, the control means may scroll out and hide a display as the output for the user to memorize information when the control means shifts to the next step.

With this configuration, when current displays are to be hidden in order to provide displays for a next step if input information is determined to be correct, the information is scrolled out and hidden. Time required for the scrolling can be used to memorize information. The speed of the scrolling may be adjusted according to speed mode.

In the above-described information processing program, when an operation to stop the working memory training is performed, the working memory training may be discontinued.

This configuration makes it possible to encourage a user to perform the working memory training without a break.

An information processing apparatus of an example embodiment includes training execution means for executing working memory training, time measurement means for measuring cumulative training time during a given period, and process execution means for executing a process of encouraging a user to perform the working memory training on the basis of a relationship between the cumulative training time during the given period and a first ideal period of time and/or a process of restricting the user from performing the working memory training on the basis of a relationship between the cumulative training time during the given period and a second ideal period of time. The training execution means includes control means for executing, a plurality of times in sequence, a process of simultaneously producing output for the user to memorize information and making a request for the user to output information memorized by the user in a step earlier by a predetermined number of steps or associated information associated with the information, input reception means for receiving input provided by the user to output the memorized information in response to the request made by the control means, and determination means for determining whether the information received by the input reception means is correct. The control means produces output and makes a request for a next step if the determination means determines that the information is correct.

This configuration also allows the process execution means to execute the process of encouraging performance of the working memory training or the process of restricting performance of the working memory training, on the basis of time spent efficiently performing the working memory training (memorization of information and output of information).

An information processing system of an example embodiment includes training execution means for executing working memory training, time measurement means for measuring cumulative training time during a given period, and a process execution means which executes a process of encouraging a user to perform the working memory training on the basis of a relationship between the cumulative training time during the given period and a first ideal period of time and/or a process of restricting the user from performing the working memory training on the basis of a relationship between the cumulative training time during the given period and a second ideal period of time. The training execution means includes control means for executing, a plurality of times in sequence, a process of simultaneously producing output for the user to memorize information and making a request for the user to output information memorized by the user in a step earlier by a predetermined number of steps or associated information associated with the information, input reception means for receiving input provided by the user to output the memorized information in response to the request made by the control means, and a determination means which determines whether the information received by the input reception means is correct. The control means produces output and makes a request for a next step if the determination means determines that the information is correct.

This configuration also allows the process execution means to execute the process of encouraging performance of the working memory training or the process of restricting performance of the working memory training, on the basis of time spent efficiently performing the working memory training (memorization of information and output of information).

An information processing method of an example embodiment includes a training execution step of executing working memory training, a time measurement step of measuring cumulative training time during a given period, and a processing execution step of executing a process of encouraging a user to perform the working memory training on the basis of a relationship between the cumulative training time during the given period and a first ideal period of time and/or a process of restricting the user from performing the working memory training on the basis of a relationship between the cumulative training time during the given period and a second ideal period of time. The training execution step includes a control step of executing, a plurality of times in sequence, a process of simultaneously producing output for the user to memorize information and making a request for the user to output information memorized by the user in a step earlier by a predetermined number of steps or associated information associated with the information, an input reception step of receiving input provided by the user to output the memorized information in response to the request made in the control step, and a determination step of determining whether the information received in the input reception step is correct. The control step includes producing output and making a request for a next step if it is determined in the determination step that the information is correct.

This configuration also allows the process execution means to execute the process of encouraging performance of the working memory training or the process of restricting performance of the working memory training, on the basis of time spent efficiently performing the working memory training (memorization of information and output of information).

According to the present invention, performance of working memory training can be encouraged or restricted on the basis of time spent efficiently performing working memory training.

These and other object, features, aspects and advantages of the present invention will become more apparent from the following detailed description of the present invention when taken in conjunction with the accompanying drawings.

### BRIEF DESCRIPTION OF THE DRAWINGS

FIG. 1 is a view of the outer appearance of a game apparatus according to an example embodiment.
FIG. 2 is a block diagram of the game apparatus according to an example embodiment.
FIG. 3 is a diagram showing how the level of working memory training increases according to an example embodiment.
FIG. 4 is a flow chart showing the overall flow of the working memory training according to an example embodiment.
FIG. 5 is a flow chart showing the flow of one stage of the working memory training according to an example embodiment.
FIG. 6A is a view showing a display example of a display section (at the time of memorization and input of an answer) according to an example embodiment.
FIG. 6B is a view showing a display example of the display section (if the answer is correct) according to an example embodiment.
FIG. 7 is a view showing a display example of an input section according to an example embodiment.

### DETAILED DESCRIPTION OF THE PREFERRED EMBODIMENT

An information processing apparatus of an example embodiment will be described below with reference to the drawings.

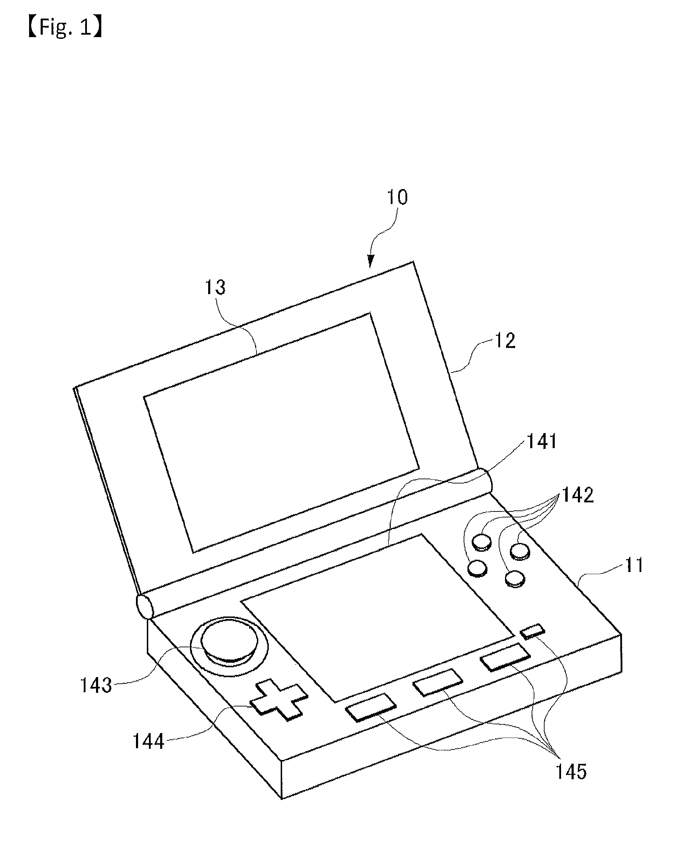

FIG. 1 is a view of the outer appearance of an information processing apparatus according to an example embodiment. In the present embodiment, the information processing apparatus is a game apparatus. As shown in FIG. 1, a game apparatus 10 includes a main body section 11 and a screen section 12 which is hinged to the main body section 11 and is a two-screen folding game apparatus which can be opened or folded down onto the main body section 11. The screen section 12 includes a display section 13 which is composed of a liquid crystal panel at the center. The main body section 11 includes a touch panel 141 at the center. The touch panel 141 is composed of a display panel covered with a touch sensor and has a display function and a function of detecting contact of an object. A plurality of round buttons 142, a slide pad 143, a cross-shaped button 144, and function buttons 145 are provided around the touch panel 141.

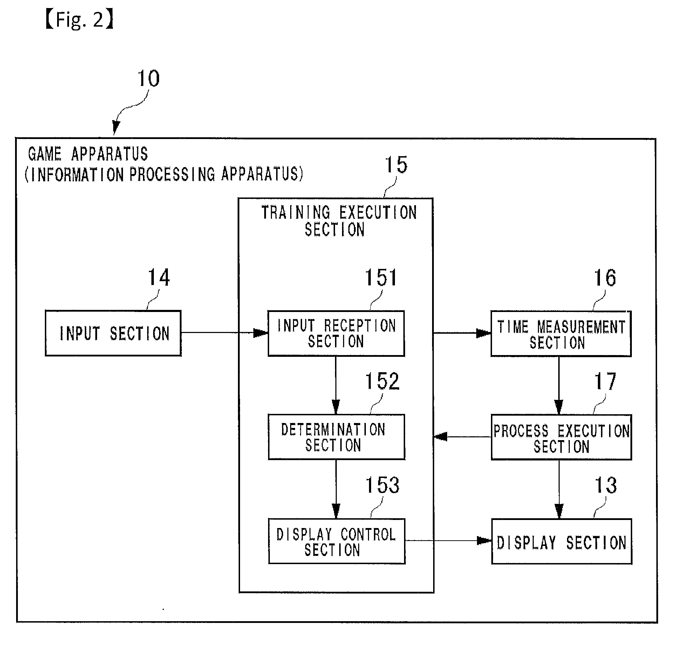

FIG. 2 is a block diagram of the game apparatus according to an example embodiment. The game apparatus 10 includes an input section 14, a training execution section 15, the display section 13, a time measurement section 16, and a process execution section 17. The input section 14 corresponds to the plurality of round buttons 142, the slide pad 143, the cross-shaped button 144, and the function buttons 145 shown in FIG. 1. The display section 13 in FIG. 2 is the display section 13 shown in FIG. 1. Functions of the training execution section 15, the time measurement section 16, and the process execution section 17 shown in FIG. 2 are implemented when an information processing program according to the present embodiment is executed by an arithmetic processing unit, memory, and the like. A slot (not shown) is formed in the main body section 11 of the game apparatus 10. When a recording medium having an information processing program recorded thereon is inserted into the slot, the information processing program is read out by the game apparatus 10.

As described above, the input section 14 corresponds to the plurality of round buttons 142, the slide pad 143, the cross-shaped button 144, and the function buttons 145 shown in FIG. 1. Various types of information can be input by a user's manipulation of the components. Among the components, the touch panel 141 can read what a user draws on the panel using a stylus. Various types of information input through the input section 14 are processed as various types of user instructions to the game apparatus 10. In the present embodiment, in particular, a case will be described where instructions as to working memory training are input.

The training execution section 15 performs calculation N-back training as working memory training. In the calculation N-back training, one stage is composed of a plurality of steps, and in each step, a calculation, the result of which is to be memorized, is presented. In each step, a user simultaneously memorizes the result of a currently presented calculation and outputs the result of a calculation presented N steps earlier than the step. Here, N represents the number of steps back and is an arbitrary natural number. In the game apparatus 10 according to the present embodiment, 1 ≤ N ≤ 99. The number of steps back is 1 to 99. For example, assume that N = 2. A user outputs the result of a calculation presented in the first step (two steps earlier than the third step) when a calculation for the third step is presented and outputs the result of a calculation presented in the second step (two steps earlier than the fourth step) when a calculation for the fourth step is presented. This operation is repeated thereafter until a predetermined number of steps are reached.

The training execution section 15 includes an input reception section 151, a determination section 152, and a display control section 153. The input reception section 151 receives input provided to the input section 14 by a user aiming at outputting information (i.e., the result of a calculation presented N steps earlier) memorized by the user, in the calculation N-back training. Particularly, the input reception section 151 recognizes a number on the basis of handwritten information on the touch panel 141. The determination section 152 determines whether information received by the input reception section 151 (i.e., a user's answer) is correct. The display control section 153 controls the display section 13, for each step of the calculation N-back training, so as to simultaneously provide a display for a user to memorize information (i.e., a display of a calculation) and a display for the user to output information memorized by the user N steps earlier (i.e., the result of a calculation presented N steps earlier).

The time measurement section 16 measures the cumulative training time of the day concerned by letting a timer run while the training execution section 15 is performing working memory training (hereinafter also simply referred to "training") and stopping the timer when training is ended or while the training is suspended. The time measurement section 16 outputs the measured cumulative training time to the process execution section 17.

The process execution section 17 receives information on the cumulative training time of the day concerned from the time measurement section 16 and performs processing, on the basis of the cumulative training time, such that a user's time spent performing working memory training is equal to a predetermined ideal period of time. It is said that training for developing working memory does not produce a favorable effect unless the training is not performed for a given period of time or longer every day. It is also said that overlong training time has an adverse effect. For this reason, in the game apparatus 10 according to the present embodiment, the process execution section 17 performs various types of processing so as to encourage a user to perform training for a given period of time or longer every day and prevent training time per day from becoming too long.

More specifically, the process execution section 17 according to the present embodiment executes a process of encouraging a user to perform training in order to increase the cumulative training time of the day concerned to not less than a first ideal period of time and, when the cumulative training time of the day concerned reaches a second ideal period of time, performs a process of restricting the user's training. The first ideal period of time according to the present embodiment is the least period of time necessary to said to bring about a favorable training effect. In the present embodiment, the first ideal period of time is set to 5 minutes. The second ideal period of time is a reference period of time, and training for a time longer than the second ideal period of time per day is undesirable. The second ideal period of time is defined as not less than the first ideal period of time. The first ideal period of time and the second ideal period of time may be equal.

In the present embodiment, the second ideal period of time is set to 5 minutes, the same in length as the first ideal period of time. That is, in the present embodiment, training performance time per day is ideally 5 minutes, and longer and shorter periods of time are both undesirable. Accordingly, in the present embodiment, a user is encouraged to perform training until the training time of the day reaches 5 minutes and is restricted from performing training after the training time of the day reaches 5 minutes. Hereinafter, the first and second ideal periods of time that are equal will be simply referred to as ideal periods of time.

Note that the first ideal period of time and the second ideal period of time can be set to, e.g., 5 minutes and 15 minutes, respectively, which is a modification of the present embodiment. In this case, a user is encouraged to perform training until the training time of the day reaches the first ideal period of time of 5 minutes and is restricted from training after the training time of the day reaches the second ideal period of time of 15 minutes.

The display section 13 displays various types of information on the basis of instructions from the process execution section 17 and display control section 153.

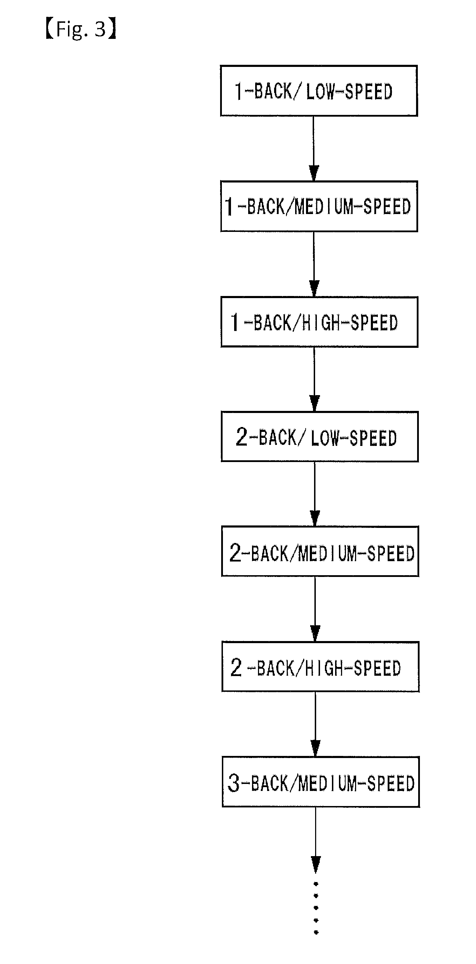

Information processing in the game apparatus 10 will be specifically described below. FIG. 3 is a diagram showing how the difficulty level of working memory training increases according to an example embodiment. The difficulty level of working memory training in the present embodiment is defined by the number of steps back and speed mode. That is, working memory training to be executed by the training execution section 15 has different difficulty levels. More specifically, there are three speed modes, i.e., low-speed mode, medium-speed mode, and high-speed mode for the number of steps back of 1 or 2, and there are two speed modes, i.e., medium-speed mode and high-speed mode for the number of steps back of 3 or larger. Low-speed mode is a mode without a time limit for giving an answer. A time limit is set for middle-speed mode, and a time limit shorter than that for middle-speed mode is set for high-speed mode. The difficulty level of working memory training increases to a next level if the rate of correct answers in a stage is not less than a predetermined value. As shown in FIG. 3, the difficulty level increases in the following order: 1-back/low-speed, 1-back/middle-speed, 1-back/high-speed, 2-back/low-speed,....

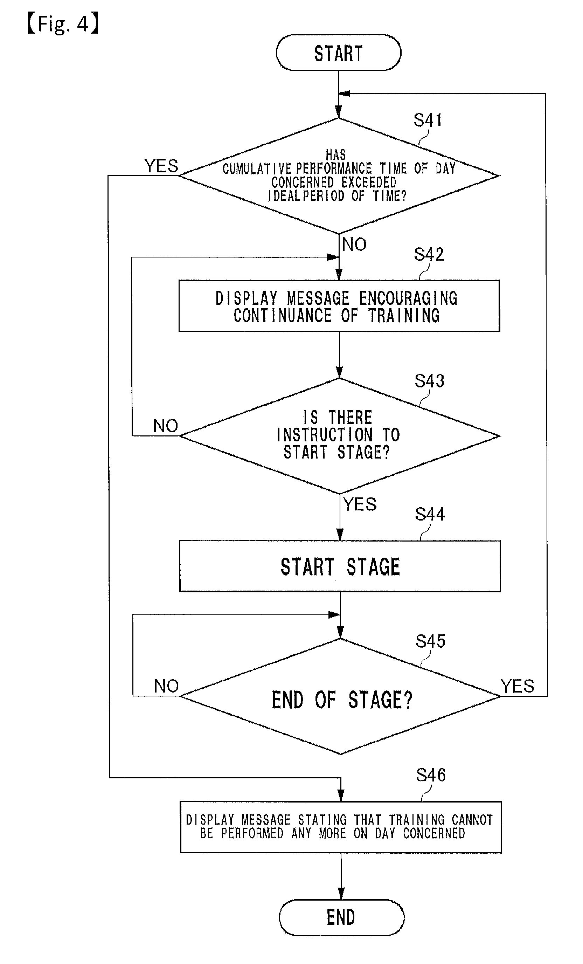

FIG. 4 is a flow chart showing the overall flow of working memory training according to an example embodiment. When a program for the calculation N-back training is executed, the process execution section 17 first determines (step S41) whether the cumulative performance time on the day concerned has exceeded the ideal period of time. If the cumulative performance time of the day concerned has exceeded the ideal period of time (YES in step S41), the process execution section 17 displays a message stating that training cannot be performed any more for the day concerned on the display section 13 in order to restrict further performance of training (step S46) and ends the process.

If it is determined in step S41 for the first time on the day concerned that the cumulative performance time has exceeded the ideal period of time, the process execution section 17 gives an incentive for the day concerned to a user. If a user accumulates a given amount or more of incentives, the user is allowed to perform a new kind of training. Such an incentive provides a user with motivation to perform training for a given period of time (the ideal period of time) every day.

If the cumulative performance time of the day concerned has not exceeded the predetermined ideal period of time (NO in step S41), the process execution section 17 displays a message encouraging continuance of training on the display section 13 (step S42) in order to bring the cumulative performance time of the day concerned to the ideal period of time. The input reception section 151 monitors the input section 14 for an instruction to start a stage of training (step S43). If there is no instruction to start a stage of training (NO in step S43), the flow returns to step S42 to display a message encouraging continuance of training.

When the input reception section 151 receives an instruction to start a stage from the input section 14 (YES in step S43), the input reception section 151 starts the stage (step S44). When the one stage of training ends (YES in step S45), the flow returns to step S41. The process execution section 17 determines again whether the cumulative performance time has exceeded the ideal period of time.

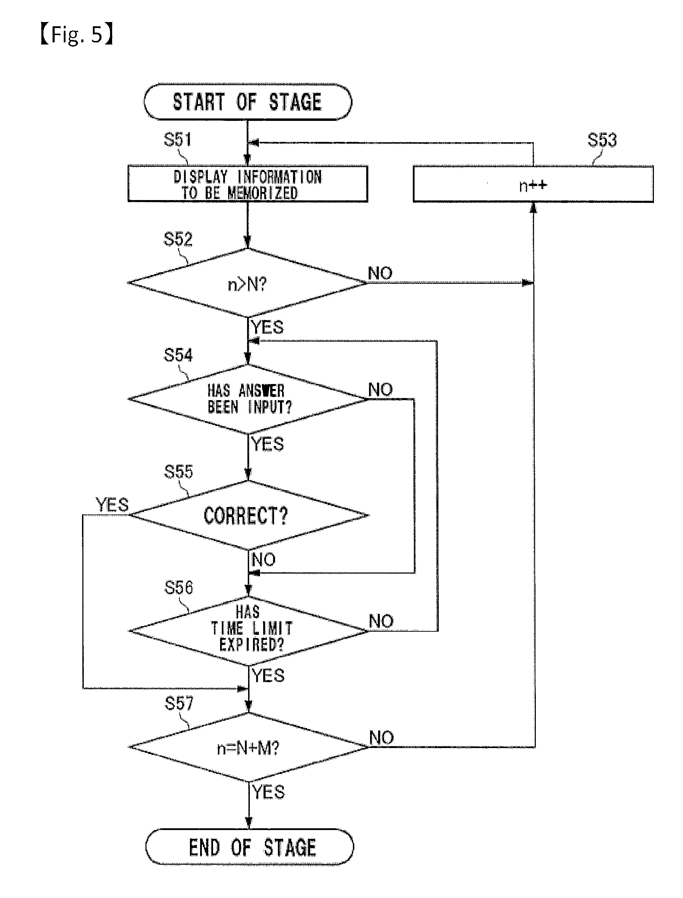

FIG. 5 is a flow chart showing the flow of one stage of the calculation N-back training according to an example embodiment. When a stage is started, the display control section 153 first displays information to be memorized by a user on the display section 13 (step S51). As described above, display of information to be memorized in the calculation N-back training is display of a calculation formula, and information to be memorized is the result of the calculation formula. Note that the result of the calculation formula is not displayed and that only the calculation formula, from which the result is derived, is displayed.

It is then determined whether n > N. Reference character n is the current step number, and its initial value is 1. Reference character N is the number of steps back. The user outputs the result of a calculation formula presented N steps earlier than the step concerned. Assume that the calculation N-back training is currently executed. In first N steps, the user does not output memorized information and only memorizes information. Accordingly, if n is less than N (NO in step S52), the display control section 153 increments n (step S53), i.e., advances to a next step. The flow returns to step S51 to display next information to be memorized. When n has exceeded N (YES in step S52) after repetition of the series of operations, the display control section 153 displays information to be memorized in a next step and determines (step S54) whether information memorized N steps earlier, i.e., an answer has been input from the user.

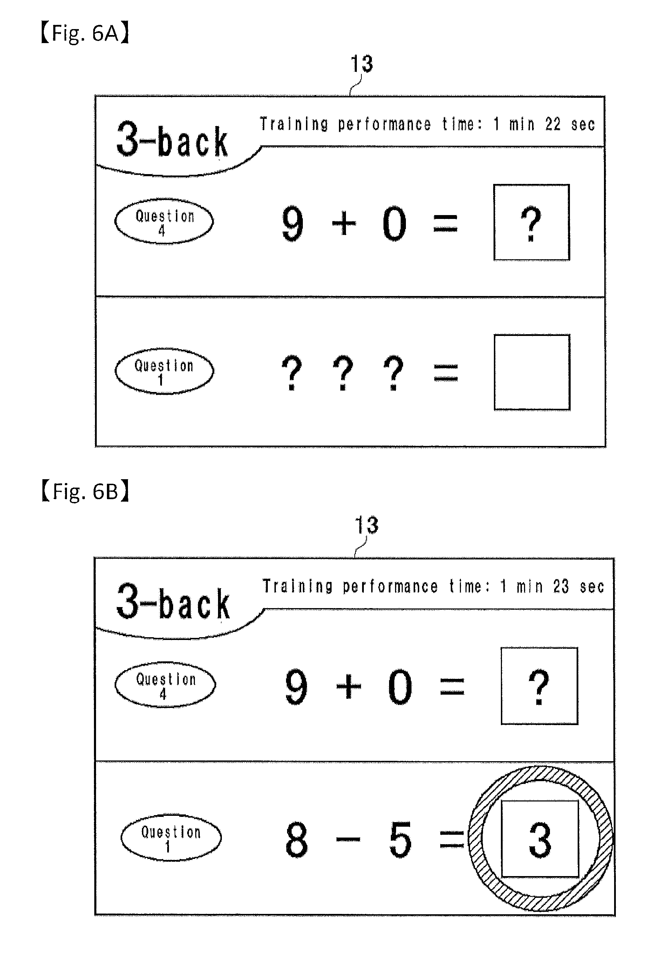

FIG. 6A is a view showing a display example of the display section (at the time of memorization and input of an answer) according to an example embodiment. FIG. 6A shows a display example of the display section 13 in the fourth step when N = 3. In the fourth step, a calculation formula in the fourth question is displayed for information to be memorized in the fourth step in an upper portion of a screen, and a display requesting output of information memorized three steps earlier, i.e., in the first step is provided in a lower portion of the screen. In the screen, the user memorizes "9" that is the result of the calculation "9 + 0" as information to be memorized in the fourth step and inputs the result of the calculation formula in the first question displayed in the first step using the input section 14. Note that the cumulative training performance time of the day concerned measured by the time measurement section 16 is displayed in the screen.

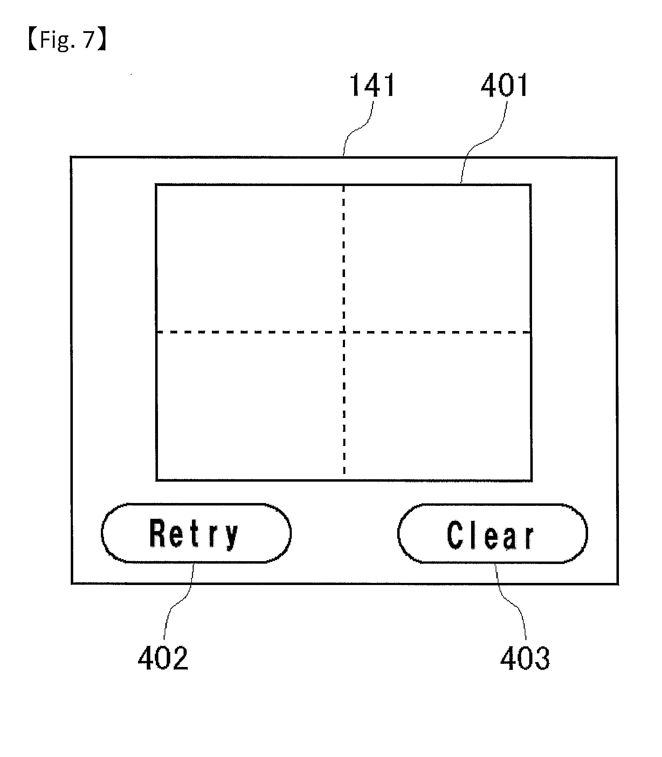

FIG. 7 is a view showing a display example of the touch panel according to an example embodiment. As shown in FIG. 7, an entry field 401 in which an answer is to be handwritten with a stylus is displayed on the touch panel 141. Below the entry field 401, a retry button 402 for restarting a stage from the beginning and a clear button 403 for clearing a handwritten answer are displayed. When the display in FIG. 6A is provided on the display section 13, a user inputs an answer in the entry field 401 displayed on the touch panel 141.

Referring back to FIG. 5, when an answer is input on the touch panel 141 (step S54), the input reception section 151 recognizes a number input as the answer and outputs the number to the determination section 152. The determination section 152 determines (step S55) whether the number is correct. If the number is incorrect (NO in step S55), the display control section 153 determines (step S56) whether a time limit set for the current step has expired. If the time limit has not expired (NO in step S56), the flow returns to step S54 to repeat steps S54 to S56.

Note that if the number is incorrect, the user can clear the input by pressing the clear button 403 on the touch panel 141 and input an answer again. If a number input as an answer cannot be recognized by the input reception section 151, the user also can clear the input by pressing the clear button 403 and input an answer again.

If no answer has been input (NO in step S54), the determination section 152 determines whether the time limit has expired. If the time limit has not expired (NO in step S56), the flow returns to step S54 to wait for input of an answer. If the determination section 152 determines in step S55 that the input answer is correct (YES in step S55), the flow advances to a next step without waiting for expiration of the time limit.

FIG. 6B is a view showing a display example of the display section (if the answer is correct) according to an example embodiment. The calculation formula in the first question is "8 - 5," and the result of the calculation is "3." It is correct to input "3" in the screen in FIG. 6B. When the correct result "3" is input, the calculation formula "8 - 5" in the first question is displayed. After that, during the transition to a next step, the calculation formula in each of the upper and lower portions scrolls out to the bottom, and a next calculation formula scrolls in from the top. That is, a calculation formula in the fifth question is displayed in the upper portion, and a display prompting for input of the result of the calculation formula in the second question is provided in the lower portion.

Referring back to FIG. 5, if the determination section 152 determines that the input result is correct (YES in step S55), the determination section 152 determines (step S57) whether n = N + M. Reference character M is the number of questions to be memorized and output in one stage. For example, M = 10. Since the user only memorizes information in the first N steps, as described above, the user only outputs memorized information in last N steps. The total number of steps is N + M. If n = N + M, processing for the current stage is over. Accordingly, if n = N + M (YES in step S57), the stage is ended.

If n # N + M (NO in step S57), i.e., the processing for the stage is not over, the display control section 153 increments n (step S53) and displays information to be memorized in a next step (step S51). If n > M, and there is no information to be memorized any more, the flow skips step S51.

The basic operation of the calculation N-back training according to the present embodiment has been described above. Special manipulations will be described below. As described above, the retry button 402 for restarting a stage from the beginning is provided in the screen (see FIG. 7) where a correct answer is to be input of the touch panel 141. A user can restart a stage from the beginning by pressing the button during the stage. Note that if a retry instruction is given three times in a row in the same stage, a stage at the difficulty level in FIG. 3 lowered by one is started from the beginning at the third retry. For example, a retry instruction is given three times in a row at 2-back/high-speed, the training execution section 15 determines that the current difficulty level is too high for the user, lowers the difficulty level by one, and starts a stage at 2-back/medium-speed.

When the screen section 12 is closed, a computer of the game apparatus 10 goes into a sleep state. Generally, a game apparatus is often designed to go into a sleep state while maintaining the state of a game when the screen section 12 is closed during the game and restart the game from the state before going into a sleep state when the screen section 12 is opened. In contrast, according to the present embodiment, when the screen section 12 is closed during a stage, the game apparatus 10 discontinues training and goes into a sleep state. When the screen section 12 is opened again, a message stating that "since training needs to be continuously performed, care should be taken not to discontinue training" is displayed on the screen, and the training execution section 15 restarts training not from the middle of the stage but from the beginning of the stage.

The training execution section 15 performs control in this manner in order to prevent a user from having a break during a stage (stopping the stage and restarting the stage after some time). This is because the calculation N-back training is a kind of working memory training and is intended to develop short-term memory, and taking a break during a stage and stopping short-term memory during the break is not effective training for a user. Accordingly, even when the screen section 12 is closed, the game apparatus 10 does not perform control that stops a stage while maintaining the state of the stage and restarts the stage from the state before the stop when the screen section 12 is opened again. The game apparatus 10 is configured not to recommend a stop during a stage to a user.

Note that an information processing apparatus need not be a game apparatus and may be another apparatus, such as an apparatus whose main function is information communication. Additionally, an information processing system in which some elements that have been described as components of a game apparatus as an information processing apparatus in the above-described embodiment are connected to other elements over a network may be constructed. Even the information processing system can achieve the same working-effects as those of the information processing apparatus. Moreover, the input section 14 for inputting a number which is an answer in the calculation N-back training need not be the touch panel 141 and may be, for example, a numeric keypad.

The embodiment has described the calculation N-back training as working memory training. In the calculation N-back training, an object displayed so as to be memorized is a calculation formula, and a user outputs the result of the calculation formula in a step later by steps, the number of which is equal to the number of steps back. That is, things displayed for memorization and things to be output by a user are associated with each other but not the same. Working memory training is also implemented by, e.g., a system in which a symbol is displayed as things to be memorized, and a user selects one from among a plurality of symbols including the memorized symbol when outputting memorized things. In other words, working memory training is not limited to the calculation N-back training.

In working memory training, things to be memorized or things associated with the things may be read aloud instead of being displayed. That is, a method for transmitting things to be memorized to a user is not limited to display appealing to vision and may be audio output appealing to the sense of hearing. Alternatively, the method for transmitting things to be memorized to a user may be one appealing to the sense of touch. A method for a user to output memorized information is not limited to writing and may be selection from among a plurality of choices, audio output, gesture, or the like.

While the invention has been described in detail, the foregoing description is in all aspects illustrative and not restrictive. It will be understood that numerous other modifications and variations can be devised without departing from the scope of the invention.

## Claims

1. An information processing program causing an information processing apparatus (10) to function as:
training execution means (15) which executes working memory training;
time measurement means (16) which measures cumulative training time during a given period; and
process execution means (17) which executes a process of encouraging a user to perform the working memory training on the basis of a relationship between the cumulative training time during the given period and a first ideal period of time and/or a process of restricting the user from performing the working memory training on the basis of a relationship between the cumulative training time during the given period and a second ideal period of time, wherein
the training execution means (15) includes
control means (153) which executes, a plurality of times in sequence, a process of simultaneously producing output for the user to memorize information and making a request for the user to output information memorized by the user in a step earlier by a predetermined number of steps or associated information associated with the information,
input reception means (151) which receives input provided by the user to output the memorized information in response to the request made by the control means, and
determination means (152) which determines whether the information received by the input reception means (151) is correct, and
the control means (153) produces output and makes a request for a next step if the determination means (152) determines that the information is correct.

2. The information processing program according to claim 1, wherein the process execution means (17) executes the process of encouraging the user to perform the working memory training in order to bring the cumulative training time during the given period to not less than the first ideal period of time.

3. The information processing program according to claim 1, wherein the process execution means (17) executes the process of restricting the user from performing the working memory training after the cumulative training time during the given period reaches the second ideal period of time.

4. The information processing program according to any one of claims 1 to 3, wherein the control means (153) produces output and makes a request for the next step if the determination means (152) does not determine that the information is correct within a time limit for the input reception means (151) to receive input and produces output and makes a request for the next step without waiting for expiration of the time limit if the determination means (152) determines that the information is correct within the time limit.

5. The information processing program according to claim 4, wherein
the input reception means (151) receives input handwritten by the user, and
the determination means (152) performs recognition processing on the handwritten input and determines whether a result of the recognition processing is correct.

6. The information processing program according to any one of claims 1 to 5, wherein the number of steps increases or decreases on the basis of a track record of the user in performing the working memory training.

7. The information processing program according to claim 6, wherein a stage of the working memory training is composed of a predetermined number of questions, and the number of questions for the stage depends on the number of steps.

8. The information processing program according to any one of claims 1 to 5, wherein
a stage of the working memory training is composed of a predetermined number of questions,
the working memory training has a plurality of stages for each of values of the number of steps,
the plurality of stages each have a different difficulty level related to a time limit for the input reception means (151) to receive input, and
a difficulty level of a next stage fluctuates depending on a track record of the user in performing the working memory training.

9. The information processing program according to any one of claims 1 to 7, wherein
a stage of the working memory training is composed of a predetermined number of questions, and
a retry that restarts the working memory training from the beginning can be performed, and when a retry instruction is given a predetermined number of times in a row, the working memory training is restarted from the beginning of a stage at a lowered difficulty level.

10. The information processing program according to any one of claims 1 to 9, wherein the control means (153) scrolls out and hides a display as the output for the user to memorize information when the control means (153) shifts to the next step.

11. The information processing program according to any one of claims 1 to 10, wherein when an operation to stop the working memory training is performed, the working memory training is discontinued.

12. An information processing apparatus comprising:
a training execution means (15) which executes working memory training;
a time measurement means (16) which measures cumulative training time during a given period; and
a process execution means (17) which executes a process of encouraging a user to perform the working memory training on the basis of a relationship between the cumulative training time during the given period and a first ideal period of time and/or a process of restricting the user from performing the working memory training on the basis of a relationship between the cumulative training time during the given period and a second ideal period of time, wherein
the training execution means (15) includes
a control means (153) which executes, a plurality of times in sequence, a process of simultaneously producing output for the user to memorize information and making a request for the user to output information memorized by the user in a step earlier by a predetermined number of steps or associated information associated with the information,
an input reception means (151) which receives input provided by the user to output the memorized information in response to the request made by the control means (153), and
a determination means (152) which determines whether the information received by the input reception means (151) is correct, and
the control means (153) produces output and makes a request for a next step if the determination means (152) determines that the information is correct.

13. An information processing system comprising:
training execution means (15) which executes working memory training;
time measurement means (16) which measures cumulative training time during a given period; and
process execution means (17) which executes a process of encouraging a user to perform the working memory training on the basis of a relationship between the cumulative training time during the given period and a first ideal period of time and/or a process of restricting the user from performing the working memory training on the basis of a relationship between the cumulative training time during the given period and a second ideal period of time, wherein
the training execution means (15) includes control means (153) which executes, a plurality of times in sequence, a process of simultaneously producing output for the user to memorize information and making a request for the user to output information memorized by the user in a step earlier by a predetermined number of steps or associated information associated with the information,
input reception means (151) which receives input provided by the user to output the memorized information in response to the request made by the control means (153), and
determination means (152) which determines whether the information received by the input reception means (151) is correct, and
the control means (153) produces output and makes a request for a next step if the determination means (152) determines that the information is correct.

14. An information processing method comprising:
training execution steps of executing working memory training (S51 to S57);
a time measurement step of measuring cumulative training time during a given period; and
processing execution steps of executing a process of encouraging a user to perform the working memory training on the basis of a relationship between the cumulative training time during the given period and a first ideal period of time and/or a process of restricting the user from performing the working memory training on the basis of a relationship between the cumulative training time during the given period and a second ideal period of time (S41 to S45), wherein
the training execution steps (S51 to S57) comprise
a control step of executing, a plurality of times in sequence, a process of simultaneously producing output for the user to memorize information and making a request for the user to output information memorized by the user in a step earlier by a predetermined number of steps or associated information associated with the information (S51),
an input reception step of receiving input provided by the user to output the memorized information in response to the request made in the control step (S51) (S54), and
a determination step of determining whether the information received in the input reception step (S54) is correct (S55), and
the control step (S51) comprises producing output and making a request for a next step if it is determined in the determination step (S55) that the information is correct.
